# EUROPEAN PATENT APPLICATION

(11) **EP 3 851 913 A1**
(43) Date of publication of application: **21.07.2021**
(21) Application number: 19903283.0
(22) Date of filing: 29.07.2019
(51) Int. Cl.: G03B 17/12, G02B 7/02, H04N 5/225

(54) **CAMERA MODULE**

(30) Priority: 25.12.2018 CN 201811587227
(71) Applicant: Zhejiang Sunny Smartlead Technologies Co., Ltd., Yuyao, Zheijiang 315400 (CN)
(72) Inventor: ZHANG, Kouwen, Yuyao, Zhejiang 315400 (CN); XU, Yi, Yuyao, Zhejiang 315400 (CN); LIU, Gaofeng, Yuyao, Zhejiang 315400 (CN); NONG, Kaixun, Yuyao, Zhejiang 315400 (CN); TANG, Xinke, Yuyao, Zhejiang 315400 (CN)
(74) Representative: Lermer, Christoph
(86) International application number: PCT/CN2019/098183
(87) International publication number: WO 2020/134063

(57) **Abstract**

The present disclosure relates to a camera module, which includes a lens barrel (11), a lens holder (12) for supporting the lens barrel (11), a connector (13) for connecting the lens barrel (11) and the lens holder (12), and a lens group (2) provided in the lens barrel (11), wherein a connection structure (14) for embedded connection is provided at a connection position of the connector (13) and the lens holder (12) and/or a connection position of the connector (13) and the lens barrel (11). By providing the connection structure, the connections at the connection positions of the connector with the lens barrel and the lens holder respectively are made tighter and firmer, thus avoiding the defect of disengagement between the lens barrel and the lens holder and improving the connection strength and service life of the entire camera module housing.

## Description

### CROSS-REFERENCE TO RELATED APPLICATIONS

The present application claims priority to Chinese patent application No. 201811587227.5, titled "Camera Module", filed with the Chinese National Intellectual Property Administration on December 25, 2018, which is incorporated herein by reference in its entity.

### FIELD OF THE INVENTION

The present disclosure relates to a camera module, in particular to a camera module for on-vehicle imaging.

### BACKGROUND

With the rapid development of the automobile industry and the rapid advancement of vehicle body electronics technology, on-vehicle camera modules are being increasingly applied to various automobiles. Especially with the application of intelligence and unmanned driving, the on-vehicle camera module, as a vision system of the automobile, is increasingly applied to automobiles.

On-vehicle camera modules are often directly installed around the vehicle body. Due to the diversity of the environment in which the vehicle is driving, especially in places with relatively harsh environments, such as rugged roads, rain, snow and the like, the reliability requirement of the camera module installed on the vehicle body is higher than that of an ordinary camera module. Existing on-vehicle camera modules are mainly composed of a lens, a lens holder, a circuit board, etc., wherein the lens and the lens holder are mainly directly bonded through an adhesive mainly in a surface-to-surface way. If there are flaws in the bonding position, when the vehicle is driving in a harsh environment, these flaws are easily amplified by factors such as vibration, resulting in quality problems such as cracks in the module and even disengagement of a lens barrel and the lens holder, which seriously affect the driving safety of the vehicle.

### SUMMARY OF THE INVENTION

The object of the present disclosure is to provide a camera module, so as to solve the problem that the connection position of the camera module is not firm.

In order to achieve the above object of the present disclosure, the present disclosure provides a camera module, which includes a lens barrel, a lens holder for supporting the lens barrel, a connector for connecting the lens barrel and the lens holder, and a lens group provided in the lens barrel; wherein a connection structure for embedded connection is provided at a connection position of the connector and the lens holder and/or a connection position of the connector and the lens barrel.

According to an aspect of the present disclosure, the connection structure includes a first connection part and a second connection part that matches the shape of the first connection part; the first connection part is arranged on the connector, and the second connection part is arranged on the lens holder and/or the lens barrel.

According to an aspect of the present disclosure, the second connection part is arranged on a side wall, an end face or at a connection position of the side wall with the end face of the lens holder and/or the lens barrel.

According to an aspect of the present disclosure, the second connection part is a groove or protrusion with a polygonal or arc-shaped cross-sectional shape, and the first connection part is a protrusion or groove that matches the shape of the second connection part.

According to an aspect of the present disclosure, an extending direction of the second connection part on the lens holder and/or the lens barrel intersects or is in parallel with an axial direction of the lens barrel.

According to an aspect of the present disclosure, if the second connection part is the groove, an anti-slip structure is further provided on an inner side wall of the second connection part; alternatively, if the second connection part is the protrusion, an anti-slip structure is further provided on an outer side wall of the second connection part.

According to an aspect of the present disclosure, the cross-sectional shape of the second connection part is triangular, rectangular, trapezoidal, semicircular or semi-elliptical.

According to an aspect of the present disclosure, when the cross-sectional shape of the second connection part is triangular, if the second connection part is provided on the side wall of the lens barrel and/or the lens holder, then an included angle A between two side faces of the second connection part satisfies: 0°<A<180°, and if the second connection part is provided on the end face or at the connection position of the side wall with the end face of the lens barrel and/or the lens holder, then the included angle A between two side faces of the second connection part satisfies: 0°<A<90°; alternatively, when the cross-sectional shape of the second connection part is trapezoidal, if the second connection part is provided on the side wall of the lens barrel and/or the lens holder, then an included angle A between two oblique side faces of the second connection part satisfies: 0°<A<180°.

According to an aspect of the present disclosure, the cross-sectional shape of the second connection part is triangular, and a transition structure is provided at the connection position between two side faces of the second connection part.

According to an aspect of the present disclosure, the connector is bonded to the lens barrel and the lens holder respectively through an adhesive; alternatively, the connector is formed by filling a viscous macromolecule polymer between the lens barrel and the lens holder and then curing the macromolecule polymer.

According to a solution of the present disclosure, by providing the connection structure, the connections at the connection positions of the connector with the lens barrel and the lens holder respectively are made tighter and firmer, thus avoiding the defect of disengagement between the lens barrel and the lens holder and improving the connection strength and service life of the entire camera module housing. At the same time, the connection structure can also form a sealed loop at the connection position of the lens barrel with the connector and/or at the connection position of the lens holder with the connector, thereby making the sealing performance of the housing of the present disclosure higher. Especially, when the present disclosure is used in the field of on-vehicle modules, the sealing performance of the module of the present disclosure can be made superior, thus making it more suitable for use in the field of on-vehicle modules. In particular, the present disclosure has a higher adaptability and a longer service life in harsh environments.

According to a solution of the present disclosure, the second connection part may be selectively provided on the lens barrel and/or the lens holder according to the use environment of the present disclosure. According to the actual use environment, the second connection part may be provided at a position that is prone to disengagement so that the connection strength at the connection position is increased, and the second connection part may be optionally provided at a position that is not prone to disengagement so that the design and manufacturing process of the housing of the camera module of the present disclosure can be simplified, which not only makes the scope of application of the present disclosure wider, but also improves design and manufacturing efficiency and saves costs.

According to a solution of the present disclosure, through the above arrangement, the second connection part is arranged on the end face or side wall or at the connection position of the end face and the side wall of the lens barrel and/or the lens holder, and the side face of the second connection part is arranged obliquely to the central axis of the housing, so that the second connection part and the first connection part embedded therewith form a "barb shape" at the connection position of the lens holder and the connector, thereby making the connection between the connector and the lens holder firmer and more stable. At the same time, the formed "barb shape" constitutes a circuitous closed structure at the connection position, which is advantageous for blocking the entry of external dust, water vapor and other impurities and protecting the safety of the assemblies in the camera module.

### BRIEF DESCRIPTION OF THE DRAWINGS

FIG. 1 is a structural view schematically showing a camera module according to an embodiment of the present disclosure;
FIG. 2 is a structural view schematically showing a second connection part on a lens holder according to an embodiment of the present disclosure;
FIG. 3 is a structural view schematically showing a second connection part on a lens holder according to another embodiment of the present disclosure;
FIG. 4 is a structural view schematically showing a second connection part on a lens holder according to another embodiment of the present disclosure;
FIG. 5 is a structural view schematically showing a second connection part on a lens holder according to another embodiment of the present disclosure;
FIG. 6 is a structural view schematically showing a second connection part on a lens holder according to another embodiment of the present disclosure;
FIG. 7 is a structural view schematically showing a second connection part on a lens holder according to another embodiment of the present disclosure;
FIG. 8 is a structural view schematically showing a second connection part on a lens holder according to another embodiment of the present disclosure;
FIG. 9 is a structural view schematically showing a second connection part on a lens holder according to another embodiment of the present disclosure;
FIG. 10 is a structural view schematically showing a second connection part on a lens holder according to another embodiment of the present disclosure;
FIG. 11 is a structural view schematically showing a second connection part on a lens barrel according to an embodiment of the present disclosure;
FIG. 12 is a structural view schematically showing a second connection part on a lens barrel according to another embodiment of the present disclosure;
FIG. 13 schematically shows an assembly flowchart of a camera module according to an embodiment of the present disclosure; and
FIG. 14 is a structural view schematically showing a camera module according to another embodiment of the present disclosure.

### DETAILED DESCRIPTION OF THE INVENTION

In order to more clearly illustrate the embodiments of the present disclosure or the technical solutions in the related art, drawings required to be used in the embodiments will be briefly described below. Obviously, the drawings in the following description show only some of the embodiments of the present disclosure, and those skilled in the art can also obtain other drawings based on these drawings without creative efforts.

When describing the embodiments of the present disclosure, the orientations or positional relationships described by the terms "longitudinal", "transverse", "upper", "lower", "front", "rear", "left", "right", "vertical", "horizontal", "top", "bottom", "inner" and "outer" are based on the orientations or positional relationships shown in the related drawings. These terms are merely used for the sake of facilitating describing the present disclosure and simplifying the description, and do not indicate or imply that the device or element involved must have a particular orientation, or must be constructed or operated in a particular orientation. Therefore, the above terms should not be construed as limiting the present disclosure.

The present disclosure will be described in detail below with reference to the drawings and specific embodiments. It is impossible to describe all the embodiments exhaustively herein, but the embodiments of the present disclosure are not limited to the following embodiments.

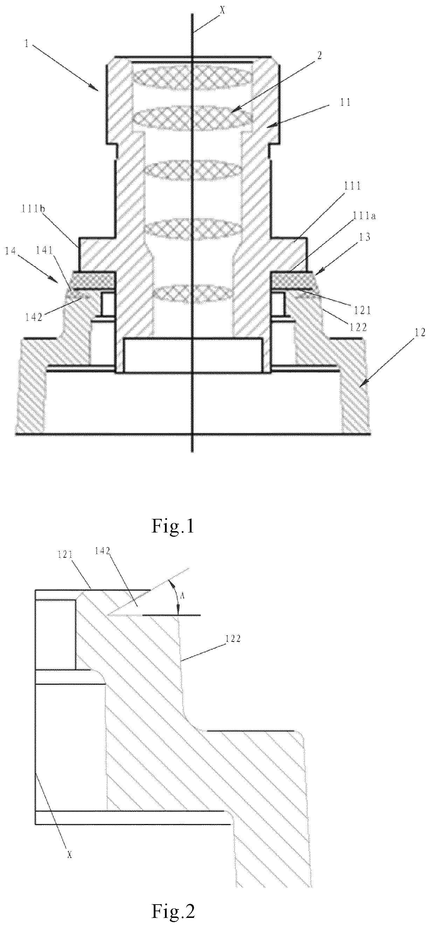

As shown in FIG. 1, according to an embodiment of the present disclosure, a camera module of the present disclosure includes a lens barrel 11, a lens holder 12, a connector 13, and a lens group 2 arranged in the lens barrel 11. In this embodiment, the lens barrel 11 and the lens holder 12 are arranged coaxially with each other, and the lens barrel 11 and the lens holder 12 are connected to each other by the connector 13. In this embodiment, a cylindrical body arranged on the lens barrel 11 is provided with a radially enlarged flange 111. The connector 13 is connected with a lower surface 111a of the flange 111 and an upper end face 121 of the lens holder 12 respectively to realize a coaxial connection of the lens barrel 11 and the lens holder 12. In this embodiment, a connection structure 14 for embedded connection is provided at the connection position of the connector 13 with the lens holder 12 and/or at the connection position of the connector 13 with the lens barrel 11. The camera module of the present disclosure is also provided with an imaging assembly. The imaging assembly receives light transmitted by the lens group 2, thereby realizing imaging of the lens of the present disclosure. With the arrangement of the connection structure 14, the connection at the connection positions of the connector 13 with the lens barrel 11 and the lens holder 12 respectively is made tighter and firmer, thus avoiding the disadvantage of disengagement between the lens barrel 11 and the lens holder 12 and improving the connection strength and service life of the entire camera module housing. At the same time, the connection structure 14 can also form a sealed loop at the connection position of the lens barrel 11 with the connector 13 and/or at the connection position of the lens holder 12 with the connector 13, thereby improving the sealing performance of the housing of the present disclosure. Especially, when the present disclosure is used in the field of on-vehicle modules, the sealing performance of the module of the present disclosure can be made superior, thus making it more suitable for use in the field of on-vehicle modules. In particular, the present disclosure has a higher adaptability and a longer service life in harsh environments.

As shown in FIG. 1, according to an embodiment of the present disclosure, the connection structure 14 includes a first connection part 141 and a second connection part 142 matching the shape of the first connection part 141. In this embodiment, the first connection part 141 is arranged on the connector 13, and the second connection part 142 is arranged on the lens holder 12 and/or the lens barrel 11. In this embodiment, the first connection part 141 and the second connection part 142 are arranged corresponding to each other. That is, if the second connection part 142 is only provided on the lens holder 12, then the first connection part 141 is only provided on a side of the connector 13 that is connected to the lens holder 12; if the second connection part 142 is only provided on the lens barrel 11, then the first connection part 141 is only provided on a side of the connector 13 that is connected to the lens barrel 11; and if the second connection part 142 is provided on both the lens holder 12 and the lens barrel 11, then the first connection part 141 is provided on both sides of the connector 13. Through the above arrangement, the second connection part 142 can be selectively provided on the lens barrel 11 and/or the lens holder 12 according to the use environment of the present disclosure. According to the actual use environment, the second connection part 142 may be provided at a position that is prone to disengagement so that the connection strength at the connection position is increased, and the second connection part 142 may be optionally provided at a position that is not prone to disengagement so that the design and manufacturing process of the housing of the camera module of the present disclosure can be simplified, which not only makes the scope of application of the present disclosure wider, but also improves design and manufacturing efficiency and saves costs.

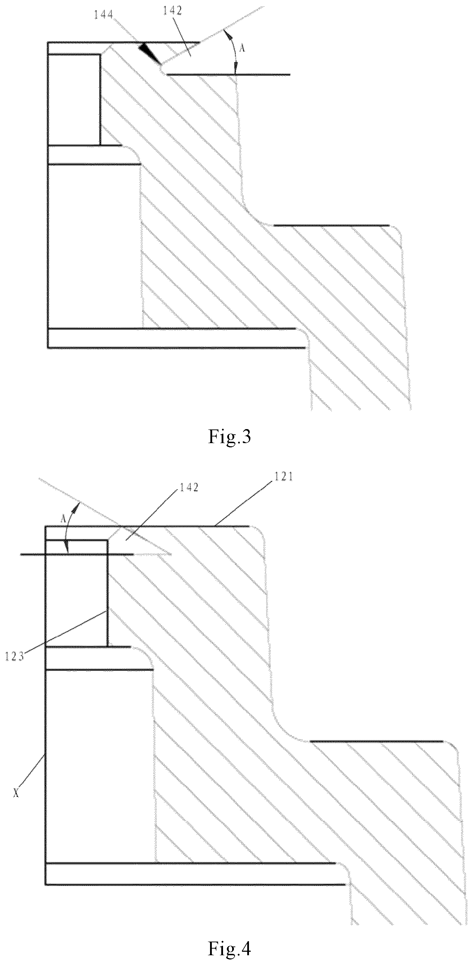

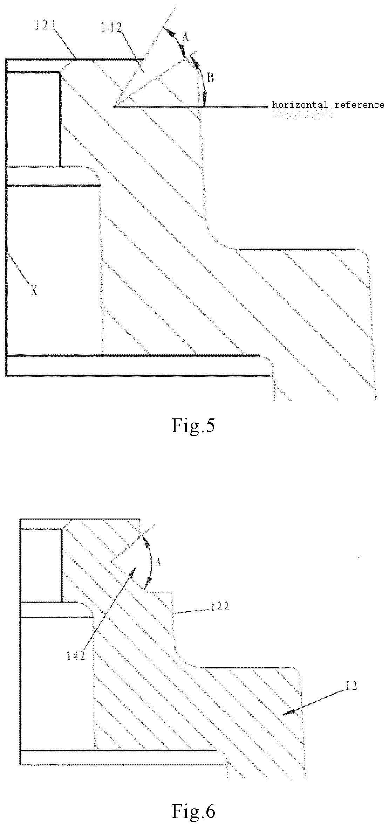

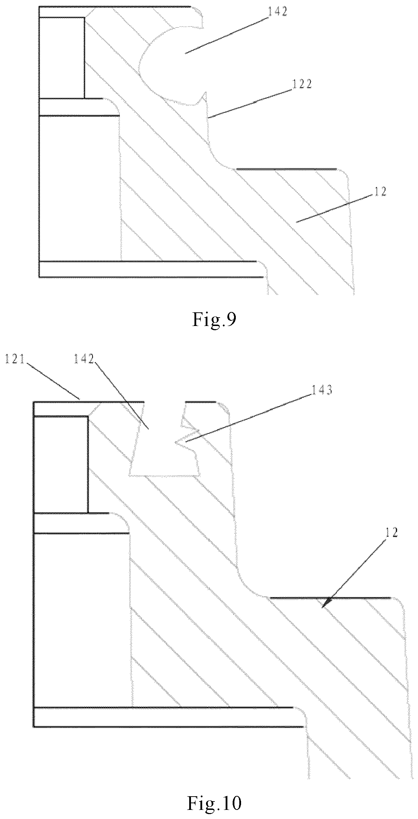

According to an embodiment of the present disclosure, the second connection part 142 is only provided on the lens holder 12. In this embodiment, the second connection part 142 may be arranged at the connection position of a side wall and an end face of the lens holder 12 (see FIG. 2 or FIG. 4), or arranged on the end face (see FIG. 5, FIG. 8 and FIG. 10), or arranged on the side wall (see FIG. 6 and FIG. 9).

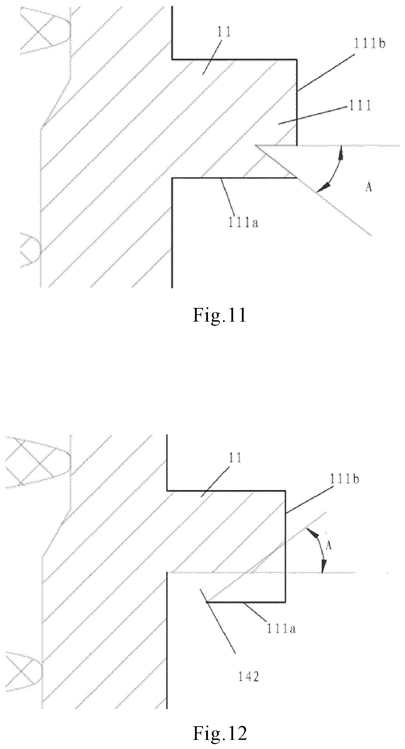

According to another embodiment of the present disclosure, the second connection part 142 is only provided on the lens barrel 11. In this embodiment, the second connection part 142 is located on a side wall (see FIG. 11) or an end face (see FIG. 12) of the lens barrel 11, or located at a connection position of the side wall and the end face.

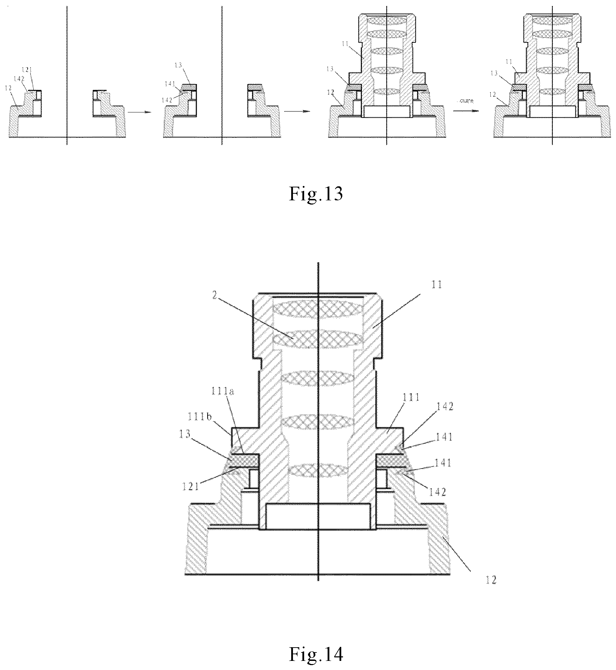

As shown in FIG. 14, according to another embodiment of the present disclosure, the second connection parts 142 are provided on the lens holder 12 and the lens barrel 11. In this embodiment, the second connection parts 142 are respectively located on the side wall, the end face, or at the connection position of the side wall and the end face of the lens barrel 11 and the lens holder 12.

According to an embodiment of the present disclosure, the second connection part 142 is a groove or protrusion with a polygonal or arc-shaped cross-sectional shape, and the first connection part 141 is a protrusion or groove that matches the shape of the second connection part 142. In this embodiment, the cross-sectional shape of the second connection part 142 is triangular, rectangular, trapezoidal, semicircular, or semi-elliptical. Of course, the cross-sectional shape of the second connection part 142 may also be set to other shapes, which may be regular or irregular, and a detailed description thereof is omitted herein.

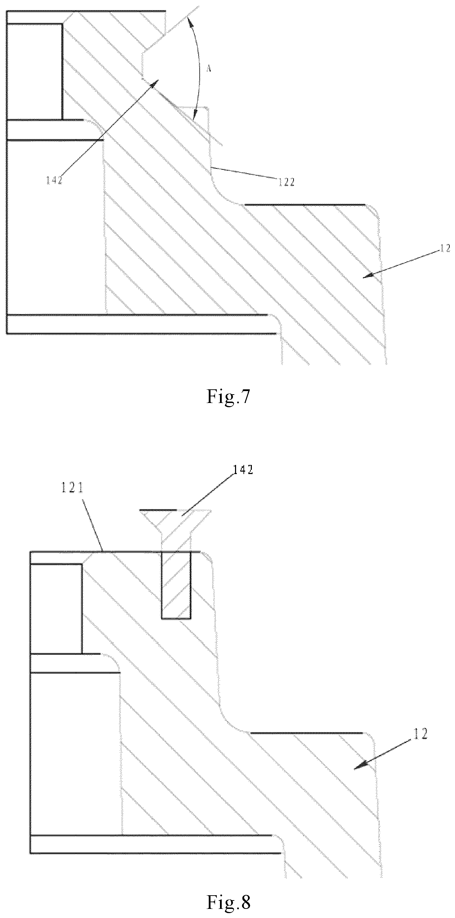

According to an embodiment of the present disclosure, in this embodiment, an extending direction of the second connection part 142 on the lens holder 12 and/or the lens barrel 11 intersects (see FIG. 2, FIG. 3, FIG. 4, FIG. 5, FIG. 6, FIG. 7, FIG. 9, FIG. 11 and FIG. 12) or is in parallel with (see FIG. 8 and FIG. 10) an axial direction of the lens barrel 11.

As shown in FIGS. 2, 4 and 5, according to an embodiment of the present disclosure, when the cross-sectional shape of the second connection part 142 is triangular, if the second connection part 142 is provided on the end face or at the connection position of the side wall with the end face of the lens barrel 11 and/or the lens holder12, an included angle A between two side faces of the second connection part 142 satisfies: 0°<A<90°. As shown in FIG. 2, in this embodiment, the second connection part 142 is a triangular groove, and it is arranged at the connection position of an upper end face 121 and an outer side face 122 of the lens holder 12 (that is, a part of the opening of the second connection part 142 is on the upper end face 121, and the other part is on the outer side face 122), wherein one side edge of the second connection part 142 is perpendicular to the central axis X of the lens barrel 11 (i.e., it is in a horizontal position), and the other side edge of the second connection part 142 is arranged obliquely with respect to the central axis X of the lens barrel 11. Therefore, an included angle A is formed between the two side faces of the second connection part 142, and the included angle A satisfies 0°<A<90°. Through the above arrangement, the second connection part 142 is arranged at the connection position of the side wall and the end face of the lens barrel 11 and/or the lens holder 12, and one side face of the second connection part 142 is arranged obliquely with respect to the central axis of the lens barrel 11, so that the second connection part 142 and the first connection part 141 embedded therewith form a "barb shape" at the connection position of the lens holder 12 and the connector 13, thereby making the connection between the connector 13 and the lens holder 12 firmer and more stable. At the same time, the formed "barb shape" constitutes a circuitous closed structure at the connection position, which is advantageous for blocking the entry of external dust, water vapor and other impurities and protecting the safety of the assemblies in the camera module. It should be pointed out that the side edge of the second connection part 142 in the horizontal position may also be arranged obliquely with respect to the central axis X of the lens barrel 11, as long as the above-mentioned range of included angle is satisfied.

As shown in FIG. 2 and FIG. 3, according to an embodiment of the present disclosure, when the cross-sectional shape of the second connection part 142 is triangular, a transition structure 144 is provided at the connection position of the two side faces of the second connection part 142. In this embodiment, the transition structure 144 may be configured as a transition fillet or a transition chamfer. The arrangement of the transition structure 144 is advantageous for reducing stress concentration at the bottom position of the second connection part 142, which is beneficial to improving the structural strength of the lens barrel 11 or the lens holder 12 of the present disclosure. At the same time, the arrangement of the transition structure 144 is also advantageous for the processing of the second connection part 142, and improves the yield of the finished product and the processing efficiency.

Referring to FIG. 4, according to another embodiment of the present disclosure, the second connection part 142 is a triangular groove, and it is arranged at the connection position of the upper end face 121 and an inner side face 123 of the lens holder 12 (i.e., a part of the opening of the second connection part 142 is on the upper end face 121, and the other part is on the inner side face 123), wherein one side edge of the second connection part 142 is perpendicular to the central axis X of the lens barrel 11 (that is, it is in the horizontal position), and the other side edge of the second connection part 142 is arranged obliquely with respect to the central axes X of the lens barrel 11. Therefore, an included angle A is formed between the two side faces of the second connection part 142, and the included angle A satisfies 0°<A<90°. Through the above arrangement, the second connection part 142 is arranged at the connection position of the side wall and the end face of the lens barrel 11 and/or the lens holder 12, and one side face of the second connection part 142 is arranged obliquely with respect to the central axis of the lens barrel 11, so that the second connection part 142 and the first connection part 141 embedded therewith form a "barb shape" at the connection position of the lens holder 12 and the connector 13, thereby making the connection between the connector 13 and the lens holder 12 firmer and more stable. At the same time, the formed "barb shape" constitutes a circuitous closed structure at the connection position, which is advantageous for blocking the entry of external dust, water vapor and other impurities and protecting the safety of the assemblies in the camera module. It should be pointed out that the side edge of the second connection part 142 in the horizontal position may also be arranged obliquely with respect to the central axis X of the lens barrel 11, as long as the above-mentioned range of included angle is satisfied.

As shown in FIG. 5, according to another embodiment of the present disclosure, the second connection part 142 is a triangular groove, and it is arranged on the upper end face 121 of the lens holder 12 (that is, the opening of the second connection part 142 is on the upper end face 121), wherein one side edge of the second connection part 142 is arranged obliquely with respect to the central axis X of the lens barrel 11, and the other side edge of the second connection part 142 is also arranged obliquely with respect to the central axis X of the lens barrel 11. Therefore, an included angle A is formed between the two side faces of the second connection part 142, and the included angle A satisfies 0°<A<90°. Through the above arrangement, the second connection part 142 is arranged on the end face of the lens barrel 11 and/or the lens holder 12, and the side faces of the second connection part 142 are arranged obliquely with respect to the central axis of the lens barrel 11, so that the second connection part 142 and the first connection part 141 embedded therewith form a "barb shape" at the connection position of the lens holder 12 and the connector 13, thereby making the connection between the connector 13 and the lens holder 12 firmer and more stable. At the same time, the formed "barb shape" constitutes a circuitous closed structure at the connection position, which is advantageous for blocking the entry of external dust, water vapor and other impurities and protecting the safety of the assemblies in the camera module. In this embodiment, as for the included angles between the two side faces of the second connection part 142 and the horizontal direction, the smallest included angle should be less than 90°, that is, the included angle B in FIG. 5 satisfies B<90°.

As shown in FIG. 6, according to an embodiment of the present disclosure, when the cross-sectional shape of the second connection part 142 is triangular, if the second connection part 142 is arranged on the side wall of the lens barrel 11 and/or the lens holder 12, then the included angle A between the two side faces of the second connection part 142 satisfies: 0°<A<180°. In this embodiment, the second connection part 142 is arranged on the outer side face 122 of the lens holder 12, and the included angle A between the two side faces of the second connection part 142 satisfies: 0°<A<180°. In this embodiment, the opening direction of the second connection part 142 and the central axis X of the lens barrel 11 are perpendicular to each other, and of course they may also be arranged obliquely to each other. Of course, when the second connection part 142 is provided on the lens barrel 11, the arrangement thereof is the same as or similar to that described above, and a detail description thereof will be omitted herein. Through the above arrangement, the second connection part 142 is arranged on the side wall of the lens barrel 11 and/or the lens holder 12, so that the second connection part 142 and the first connection part 141 embedded therewith form a "barb shape" at the connection position of the lens holder 12 and the connector 13, thereby making the connection between the connector 13 and the lens holder 12 firmer and more stable. At the same time, the formed "barb shape" constitutes a circuitous closed structure at the connection position, which is advantageous for blocking the entry of external dust, water vapor and other impurities and protecting the safety of the assemblies in the camera module.

As shown in FIG. 7, according to an embodiment of the present disclosure, when the cross-sectional shape of the second connection part 142 is trapezoidal, if the second connection part 142 is arranged on the side wall of the lens barrel 11 and/or the lens holder 12, then the included angle A between the two oblique side faces of the second connection part 142 satisfies: 0°<A<180°. In this embodiment, the opening direction of the second connection part 142 and the central axis X of the lens barrel 11 are perpendicular to each other, and of course they may also be arranged obliquely to each other. Of course, when the second connection part 142 is provided on the lens barrel 11, the arrangement thereof is the same as or similar to that described above, and a detail description thereof will be omitted herein. Through the above arrangement, the second connection part 142 is arranged on the side wall of the lens barrel 11 and/or the lens holder 12, and the side faces of the second connection part 142 are arranged obliquely to the central axis of the housing, so that the second connection part 142 and the first connection part 141 embedded therewith form a "barb shape" at the connection position of the lens holder 12 and the connector 13, thereby making the connection between the connector 13 and the lens holder 12 firmer and more stable. At the same time, the formed "barb shape" constitutes a circuitous closed structure at the connection position, which is advantageous for blocking the entry of external dust, water vapor and other impurities and protecting the safety of the assemblies in the camera module.

According to an embodiment of the present disclosure, when the cross-sectional shape of the second connection part 142 is triangular, if the second connection part 142 is arranged on the end face of the lens barrel 11 and/or the lens holder 12 or at the connection position between the side wall and the end face, then the second connection part 142 is arranged obliquely with respect to the axis of the lens barrel 11, that is, the extending direction of the second connection part 142 intersects the axial direction of the lens barrel 11. In this embodiment, when the cross section of the second connection part 142 is a triangle, the plane on which the bisector of the angle is located and the central axis X are arranged obliquely to each other, as shown in FIGS. 2 to 5. Through the above arrangement, the oblique state between the second connection part 142 and the central axis of the lens barrel 11 is thereby ensured, so that the snap-fit structure formed at the connection position of the connector 13 with the lens barrel 11 and/or the lens holder 12 can hold the lens barrel 11 and/or the lens holder 12 taut, and reduce or avoid vibration of the lens barrel 11 and/or the lens holder 12, which is advantageous for ensuring the strength of the housing of the camera module.

As shown in FIG. 8, according to another embodiment of the present disclosure, the cross-sectional shape of the second connection part 142 may be trapezoidal. In this embodiment, the second connection part 142 is a protrusion provided on the lens holder 12 and the extending direction thereof is parallel with the axial direction of the lens barrel 11. As shown in FIG. 8, the cross section of the second connection part 142 is an inverted trapezoid, that is, the width of the end far away from the upper end face 121 is greater than the width of the end close to the upper end face 121. Therefore, a "barb-like structure" is formed between the second connection part 142 and the upper end face 121, thereby ensuring the stability of the connection between the connector 13 and the lens holder 12. Of course, the second connection part 142 may also be configured into other shapes, which will not be described in detail herein. In addition, the second connection part 142 may also be arranged on the lens barrel 11, and the arrangement thereof is the same as that described above, which will not be described in detail herein. Correspondingly, the shapes of the first connection part 141 on the connector 13 and the second connection part 142 are matched. In this embodiment, the second connection part 142 and the lens holder 12 are detachably connected, or may be integrally provided. As shown in FIG. 8, there is a groove in the lens holder 12, which is configured to install the second connection part 142. A lower end of the second connection part 142 is fixedly connected with the groove in an embedded manner, and an upper end thereof forms a "barb-like structure".

As shown in FIG. 9, according to another embodiment of the present disclosure, the cross-sectional shape of the second connection part 142 may also be an arc shape. The second connection part 142 is arranged on the outer side face 122 of the lens holder 12. Of course, the arc shape may be a circular arc or an elliptical arc. The length of the arc may be a minor arc or a major arc. In this embodiment, the arc shape of the cross section of the second connection part 142 is a major arc (that is, the central angle is greater than 180°). By setting the arc shape as a major arc, it shrinks at the opening position, thereby making the connection firmer and more reliable. Through the above arrangement, it is ensured that after the first connection part 141 and the second connection part 142 are embedded and connected to each other, the second connection part 142 can effectively avoid the disengagement of the first connection part 141, thereby ensuring the connection strength of the present disclosure.

As shown in FIG. 10, according to an embodiment of the present disclosure, the second connection part 142 is a trapezoidal groove provided on the lens holder 12, and the extending direction of the second connection part 142 on the lens holder 12 is also parallel with the axial direction of the lens barrel 11. The upper end of the trapezoidal groove has a small opening, so it has a good limiting and tightening effect. In order to further improve the connection stability of the present disclosure, an anti-slip structure 143 is also provided on the inner side wall of the second connection part 142. In this embodiment, the anti-slip structure 143 may be a combination of one or more of randomly distributed protrusions, grooves or threads, or a combination of one or more of regularly arranged protrusions and grooves.

According to another embodiment of the present disclosure, the second connection part 142 is a protrusion, and an anti-slip structure 143 is also provided on the outer side wall of the second connection part 142. In this embodiment, the anti-slip structure 143 may be a combination of one or more of randomly distributed protrusions, grooves or threads, or a combination of one or more of regularly arranged protrusions and grooves.

Through the above arrangement, the anti-slip structure 143 may also be arranged in other structures of the second connection part 142, which further ensures the connection strength of the present disclosure.

As shown in FIG. 11, according to an embodiment of the present disclosure, the cross-section of the second connection part 142 is triangular, and the second connection part 142 is arranged on an outer side face 111b of the flange 111. The arrangement thereof is the same as the second connection part 142 on the lens holder 12, which will not be described in detail herein.

As shown in FIG. 12, according to an embodiment of the present disclosure, the cross-section of the second connection part 142 is triangular, and the second connection part 142 is arranged on the lower end face 111a of the flange 111. The arrangement thereof is the same as the second connection part 142 on the lens holder 12, which will not be described in detail herein.

According to an embodiment of the present disclosure, the connector 13 is bonded to the lens barrel 11 and the lens holder 12 respectively through an adhesive; alternatively, the connector 13 is formed by filling a viscous macromolecule polymer between the lens barrel 11 and the lens holder 12 and then curing the macromolecule polymer. As shown in FIG. 1, the lens barrel 11 is not provided with the second connection part 142, and the lens holder 12 is provided with the second connection part 142. Correspondingly, the connector 13 is only provided with the first connection part 141 that matches the second connection part 142 on the lens holder 12. In this embodiment, the second connection part 142 is filled by coating a viscous macromolecule polymer onto the lens holder 12 having the second connection part 142, and an initial shape of the connector 13 is formed. After this, the lens barrel 11 is installed and positioned on the upper surface of the connector 13. After the lens barrel 11 is installed in place, the connector 11 is cured so that the upper surface of the connector 13 and the lens barrel 11 are fixed and connected to each other, thus finally forming the connector 13. Of course, the lens barrel 11 and the lens holder 12 may also be connected to each other through a prefabricated connector 13. For example, an adhesive is first coated onto the upper end face 121 of the lens holder 12 and the second connection part 142, and then the connector 13 and the lens holder 12 are installed in an embedded manner; then, an adhesive is coated onto the upper surface of the connector 13, the lens barrel 11 is installed and positioned on the upper surface of the connector 13 which is coated with the adhesive, and finally the assembled camera module is cured to complete the assembly.

As shown in FIG. 1 and FIG. 14, according to another embodiment of the present disclosure, the second connection parts 142 are provided on both the lens barrel 11 and the lens holder 12, and correspondingly, there are two first connection parts on the connector 13. In this embodiment, the arrangement of the second connection parts 142 is the same as the foregoing manner, and a detail description thereof will be omitted herein. The connection of the connector 13 is also the same as the foregoing manner, and a detail description thereof will be omitted herein.

The above content is only an example of the specific solution of the present disclosure. For the devices and structures that are not described in detail, it should be understood that the general devices and general methods existing in the art are used to implement the present disclosure. The above described is only one solution of the present disclosure, and is not intended to limit the present disclosure. For those skilled in the art, various modifications and changes can be made to the present disclosure. Any modifications, equivalent substitutions, improvements or the like made within the spirit and principle of the present disclosure are intended to be included in the scope of protection of the present disclosure.

## Claims

1. A camera module, comprising a lens barrel (11), a lens holder (12) for supporting the lens barrel (11), a connector (13) for connecting the lens barrel (11) and the lens holder (12), and a lens group (2) provided in the lens barrel (11),
wherein a connection structure (14) for embedded connection is provided at a connection position of the connector (13) and the lens holder (12) and/or a connection position of the connector (13) and the lens barrel (11).

2. The camera module according to claim 1, wherein the connection structure (14) comprises a first connection part (141) and a second connection part (142) that matches the shape of the first connection part (141); and
the first connection part (141) is arranged on the connector (13), and the second connection part (142) is arranged on the lens holder (12) and/or the lens barrel (11).

3. The camera module according to claim 2, wherein the second connection part (142) is arranged on a side wall, an end face or at a connection position of the side wall with the end face of the lens holder (12) and/or the lens barrel (11).

4. The camera module according to claim 3, wherein the second connection part (142) is a groove or protrusion with a polygonal or arc-shaped cross-sectional shape, and the first connection part (141) is a protrusion or groove that matches the shape of the second connection part (142).

5. The camera module according to claim 4, wherein an extending direction of the second connection part (142) on the lens holder (12) and/or the lens barrel (11) intersects or is in parallel with an axial direction of the lens barrel (11).

6. The camera module according to claim 4 or 5, wherein if the second connection part (142) is the groove, an anti-slip structure (143) is further provided on an inner side wall of the second connection part (142); alternatively, if the second connection part (142) is the protrusion, an anti-slip structure (143) is further provided on an outer side wall of the second connection part (142).

7. The camera module according to claim 6, wherein the cross-sectional shape of the second connection part (142) is triangular, rectangular, trapezoidal, semicircular or semi-elliptical.

8. The camera module according to claim 7, wherein when the cross-sectional shape of the second connection part (142) is triangular, if the second connection part (142) is provided on the side wall of the lens barrel (11) and/or the lens holder (12), then an included angle A between two side faces of the second connection part (142) satisfies: 0°<A<180°, and if the second connection part (142) is provided on the end face or at the connection position of the side wall with the end face of the lens barrel (11) and/or the lens holder (12), then the included angle A between two side faces of the second connection part (142) satisfies: 0°<A<90°;
alternatively, when the cross-sectional shape of the second connection part (142) is trapezoidal, if the second connection part (142) is provided on the side wall of the lens barrel (11) and/or the lens holder (12), then an included angle A between two oblique side faces of the second connection part (142) satisfies: 0°<A<180°.

9. The camera module according to claim 7, wherein the cross-sectional shape of the second connection part (142) is triangular, and a transition structure (144) is provided at the connection position between two side faces of the second connection part (142).

10. The camera module according to claim 1, wherein the connector (13) is bonded to the lens barrel (11) and the lens holder (12) respectively through an adhesive; alternatively, the connector (13) is formed by filling a viscous macromolecule polymer between the lens barrel (11) and the lens holder (12) and then curing the macromolecule polymer.
